# EUROPEAN PATENT APPLICATION

(11) **EP 1 070 745 A1**
(43) Date of publication of application: **24.01.2001**
(21) Application number: 99250247.6
(22) Date of filing: 23.07.1999
(51) Int. Cl.: C08L 77/00, C08L 67/02, C08K 13/02, C08L 25/18

(54) **Flame retardant compositions**

(71) Applicant: ALBEMARLE CORPORATION, Baton Rouge, LA 70801-1765 (US)
(72) Inventor: De Schryver, Daniel A., 2820 Bonheiden (BE); Fasbinder, Dominique, 4260 Braives (BE)
(74) Representative: UEXKÜLL & STOLBERG

(57) **Abstract**

A flame retardant molding composition which comprises a blend formed from at least the following components: (A) a thermoplastic polyamide or thermoplastic polyester polymer (B) at least one organic halogen-containing flame retardant, (C) a zinc borate, a mixed oxide of zinc and boron, or zinc sulfide, or a mixture of any two or more of the foregoing; and (D) an olefin-based polymer. The composition produces molded articles which exhibit increased comparative tracking index ratings.

## Description

### TECHNICAL FIELD

This invention relates to flame-retardant thermoplastic polyamide and thermoplastic polyester compositions having improved electrical properties.

### BACKGROUND

Thermoplastic polyamides such as glass-filled nylon 6, nylon 6,6 and nylon 4,6 and other high temperature nylons, and thermoplastic polyesters such as polybutylene terephthalate and polyethylene terephthalate are of interest for the production of articles having electrical and electronic applications. Besides flame resistance, electrical resistance is required in order to effectively utilize such polymers in such applications. Unfortunately, a shortcoming of many flame retarded polyamide thermoplastics and thermoplastic polyesters is their tendency to allow the passage of electric current over their surface when wet with water. This problem is exacerbated by the presence in the nylon or polyester polymer of glass reinforcement or a bromine-containing flame retardant, and the presence of both glass reinforcement and a bromine-containing flame retardant makes the problem even worse.

A need thus exists for a way of overcoming this serious deficiency. In particular, it would be of considerable advantage if a way could be found of increasing both the flame retardancy and the comparative tracking index (CTI) of molded polyamides and molded polyesters, including molded polyamides and molded polyesters containing glass reinforcement, CTI being a measure of the resistance of a material to the propagation of arcs (tracks) along its surface under wet conditions.

This invention is deemed to effectively and efficiently fulfill the foregoing need.

### THE INVENTION

In accordance with this invention it is now possible to provide flame retardant polyamide and polyester thermoplastic polymer compositions in which the CTI has been increased very substantially. Indeed, this invention makes it possible by use of preferred components to produce molded flame retarded articles having a CTI of at least 400 volts, and in some cases CTI values of 500 volts or more. In fact, it has been found possible to provide certain nylon compositions, even glass fiber-reinforced nylon compositions, which have CTI values of 600 volts.

Pursuant to this invention there is provided a molding composition which comprises a blend formed from at least the following components: (A) a thermoplastic polyamide or polyester polymer, (B) at least one organic halogen-containing flame retardant, (C) a zinc borate, a mixed oxide of zinc and boron, or zinc sulfide or any combination of any two or more of these; and (D) an olefin-based polymer, preferably a propylene-based polymer, and most preferably a polypropylene homopolymer. It is preferred to include at least one polymeric anti-dripping agent as a component of the blend. The blends of this invention may also contain; and in many cases will contain a reinforcing agent such as glass fiber, mineral filler or combinations of these.

In applications where extremely high CTI values are required and where mechanical properties are less critical, the blend additionally has included therein a silicon-containing material, especially an organic polymer of silicon such as poly(dimethylsiloxane), especially where the polymer is in the form of (a) a liquid, or (b) a masterbatch composed of the silicon polymer predispersed in a suitable carrier resin, or (c) a finely-divided solid composed of the silicon polymer absorbed onto an inorganic carrier such as fumed silica.

Typically, the amount of polyamide or polyester resin blended into the composition will be in the order of at least 30% of the total weight of the composition. In the case of glass-filled polyamide and polyester compositions at least 55% of the total weight of the blended composition will be composed of the polyamide or polyester and the reinforcing/filling agent such as glass fiber or mineral filler. Of the total weight of the polyamide or polyester composition, usually the amounts of the required additive components of this invention will fall in the following approximate ranges: 5 to 40 wt% of organic halogen-containing flame retardant, 3 to 12 wt% of the zinc compound, and 1 to 10 wt% of the olefin-based polymer. Other components, if used, will typically fall in the following approximate proportions based on the total weight of the polyamide or polyester composition: 0 to 2 wt% of polymeric anti-dripping agent, 0 to 3 wt% of silicon powder, 0 to 5 wt% of organic silicon-containing polymer, and 0 to 15 wt% of customary additives for polyamides or polyesters such as processing auxiliaries; UV, light, and heat stabilizers; additional flame retardant(s), and agents for improving impact strength or compatibility.

In the case of glass-reinforced nylon polymer compositions of this invention, preferred proportions of the various components based on the total weight of the composition are as follows:
A) Glass-reinforced polyamide resin, 50 to 80 wt%;
B) Organic halogen flame retardant, 12 to 25 wt%;
C) Zinc compound, 3 to 12 wt%;
D) Olefin-based polymer, 1 to 8 wt%;
E) Polymeric anti-dripping agent, 0 to 2 wt%;
F) Organic silicon-containing polymer used as the polymer absorbed on fumed silica, 0 to 3 wt%;
G) Organic silicon-containing polymer used as the polymer dispersed in polyamide, 0 to 5 wt%;
H) Processing, stabilizing, impact strength, and/or compatibilizing additives, 0 to 10 wt%.

Preferred proportions for the glass-reinforced polyester compositions of this invention, again based on the total weight of the composition, are as follows:
A) Glass-reinforced polyester resin, 60 to 85 wt%;
B) Organic halogen flame retardant, 8 to 16 wt%;
C) Zinc compound, 3 to 8 wt%;
D) Olefin-based polymer, 1 to 7 wt%;
E) Polymeric anti-dripping agent, 0 to 2 wt%;
F) Organic silicon-containing polymer used as the polymer absorbed on fumed silica, 0 to 3 wt%;
G) Organic silicon-containing polymer used as the polymer dispersed in polyester, 0 to 5 wt%;
H) Processing, stabilizing, impact strength, and/or compatibilizing additives, 0 to 10 wt%.

In the above listings of preferred proportions for the glass-reinforced nylon polymer compositions and glass-reinforced polyester compositions of this invention, the weights for components F) and G) are based solely on the weights of the organic silicon-containing polymer. Thus in the case of F), the weight of the fumed silica is excluded. Likewise, in the case of G), the weight of the polymer in which the polyamide or polyester is predispersed, is excluded.

When employing a polybromostyrene flame retardant having at least 58 wt% of bromine, such as HP-7010 flame retardant (Albemarle Corporation) and zinc borate or mixed oxides of zinc and boron, an especially desirable ratio of these components is from 2.0 to 2.6 parts by weight of the polybromostyrene per each part by weight of the boron compound.

Also provided by this invention are flame retardant additive compositions which are useful for providing increased flame retardancy and increased comparative tracking index values to engineering thermoplastics, especially nylon or polyester thermoplastics, and most especially glass-filled or glass-reinforced nylon or polyester thermoplastics. These compositions comprise (i) at least one organic halogen-containing flame retardant, (ii) a zinc borate, a mixed oxide of zinc and boron, or zinc sulfide or any combination of any two or more of these, and (iii) an olefin-based polymer, preferably a propylene-based polymer, and most preferably a polypropylene homopolymer, in proportions of 0.5 to 40 parts by weight of (i) and 0.3 to 12 parts by weight of (ii) per part by weight of (iii). When used with nylon preferred proportions are 1.5 to 25 parts by weight of (i) and 0.4 to 12 parts by weight of (ii) per part by weight of (iii). For use in polyester preferred proportions are 1.1 to 16 parts by weight of (i) and 0.4 to 8 parts by weight of (ii) per part by weight of (iii). One or more of components E) through H) above can be and preferably are included in the additive compositions of this invention. Thus on a parts-by-weight basis up to 2 parts of polymeric anti-dripping agent, up to 3 parts of organic silicon-containing polymer used as the polymer absorbed on fumed silica, up to 5 parts of organic silicon-containing polymer used as the polymer dispersed in polyamide or polyester, and/or up to 10 parts of processing, stabilizing, impact strength, and/or compatibilizing additives can be present in the additive composition per part of the olefin-based polymer present therein.

Another embodiment of this invention is a method of increasing the flame retardancy and comparative tracking index of a thermoplastic polyamide or thermoplastic polyester, which method comprises blending with the polyamide or polyester suitable amounts of the additive components in accordance with this disclosure. Additional embodiments, features, and advantages of this invention will become still further apparent from the ensuing description and appended claims.

### FURTHER DETAILED DESCRIPTION

### Polyamide

The polyamide substrate polymer can be any amorphous and/or partly crystalline, predominately aliphatic/cycloaliphatic or partially aromatic thermoplastic polyamide. Typically such materials are produced by polycondensation and/or polymerization processes from diamines which are predominately or entirely aliphatic or cycloaliphatic in structure, or which are partially or entirely aromatic in structure, and carboxylic acids or lactams which are predominantly or entirely aliphatic or cycloaliphatic in structure, or which are partially or entirely aromatic in structure. Typical amines used in forming polyamides include such diamines as hexamethylenediamine, tetramethylenediamine, 2,2,4- and 2,4,4-trimethylhexamethylenediamine, diaminodicyclohexylmethane (isomers), diaminodicyclohexylpropane (isomers) and isophoronediamine (isomers), and xylylenediamine. Also used as source materials are aminocarboxylic acids such as ε-aminocaproic acid, or ω-aminocarboxylic acids such as ω-aminolauric acid and ω-aminoundecanoic acid. Typically, the carboxylic acid used are aliphatic or mixed aliphatic-aromatic dicarboxylic acids having less than 50% by weight aromatic constituents such as adipic acid, 2,2,4- and 2,4,4-trimethyladipic acid, azelaic acid, sebacic acid, decanedicarboxylic acid, dodecanedicarboxylic acid, cyclohexanedicarboxylic acid, hexahydroterephthalic acid, isophthalic acid and terephthalic acid.

Copolyamides from the majority of the known monomers can also be used.

Illustrative polyamides which may be used in the practice of this invention are such polyamides as nylon 6, nylon 6,6, nylon 6,9, nylon 6,10, nylon 6,12, nylon 11, nylon 12, nylon 12,12, nylon 6/6,6 copolymer, and high temperature nylons such as nylon 4,6, and partially aromatic nylons (e.g., Ixef polyarylamide PA MXD6 from Solvay, Zytel HTN from DuPont, and Amodel polyarylamide from Amoco). Other polyamides which may be used include Stanyl polyamide 46 from DSM, Vydyne polyamide 6/66 copolymers from Monsanto, polyamide 612 (Vestamid D from Creanova), and similar polyamides. Of the various nylon polymers, nylon 6 and nylon 6,6 are the preferred substrate polymers.

This invention is also applicable to thermoplastic blends or alloys of one or more polyamides such as, for example, polyamide-polyolefin blends or alloys, polyamide-ionomer blends or alloys, polyamide-ABS blends or alloys, polyamide-EPDM blends or alloys, polyamide-polyphenylene oxide blends or alloys, or impact-modified polyamides.

Methods for producing polyamide polymers are known and described in the literature. See, for example, *Encyclopedia of Polymer Science and Technology,* Vol. 10, pages 460-482, John Wiley & Sons, Inc., copyright 1969; and Kirk-Othmer, *Encyclopedia of Chemical Technology,* 4th Ed., Vol. 19, pages 559-584, John Wiley & Sons, Inc., copyright 1996.

### Polyester

Thermoplastic polyesters, often referred to as polyalkylene terephthalates, are reaction products of aromatic dicarboxylic acid or reactive derivatives thereof, such as methyl esters or anhydrides, and aliphatic, cycloaliphatic, or araliphatic diols, and mixtures of such reaction products. Examples of such thermoplastic polyesters include polyethylene terephthalate, polypropylene terephthalate, polybutylene terephthalate, polycyclohexylene dimethylene terephthalate, and related copolyesters and blends, including blends of one or more thermoplastic polyesters with one or more other thermoplastic polymers such as polycarbonates, and especially aromatic polycarbonates.

Preferred thermoplastic polyesters contain at least 80% by weight and preferably at least 90% by weight, based on the dicarboxylic acid component, of terephthalic acid and at least 80% by weight and preferably at least 90% by weight, based on the diol component, of ethylene glycol and/or 1,4-butanediol units.

In addition to terephthalic acid units, the preferred thermoplastic polyesters may contain up to 20 mole % and preferably up to 10 mole % of units of other aromatic or cycloaliphatic C₈₋₁₄ dicarboxylic acids or aliphatic C₄₋₁₂ dicarboxylic acids, such as, for example, units of phthalic acid, isophthalic acid, 2,6-naphthalene dicarboxylic acid, 4,4'-diphenyl dicarboxylic acid, succinic acid, adipic acid, sebacic acid, azelaic acid, or cyclohexane diacetic acid.

In addition to ethylene glycol and 1,4-butanediol units, the preferred thermoplastic polyesters may contain up to 20 mole % and preferably up to 10 mole % of other aliphatic C₃₋₁₂ diols or cycloaliphatic C₆₋₁₂ diols, such as, for example, units of 1,3-propanediol, 2-ethylpropane-1,3-diol, neopentyl glycol, 1,5-pentanediol, 1,6-hexanediol, 1,4-cyclohexanedimethanol, 3-ethylpentane-2,4-diol, 2-methylpentane-2,4-diol, 2,2,3-trimethylpentane-1,3-diol, 2-ethylhexane-1,3-diol, 2,2-diethylpropane-1,3-diol, 2,5-hexanediol, 2,2-bis(4-hydroxycyclohexyl)propane, 2,4-dihydroxy-1,1,3,3-tetramethylcyclobutane, 2,2-bis[4-(2-hydroxyethoxy)phenyl]propane, or 2,2-bis-[4-hydroxypropoxy)phenyl]propane.

Polyalkylene terephthalates may be branched by incorporation of relatively small quantities of trihydric or tetrahydric alcohols or tribasic or tetrabasic carboxylic acids. In this connection see, for example, U.S. Pat. No. 3,692,744. Examples of preferred branching agents are trimesic acid, trimellitic acid, trimethylol ethane and propane and pentaerythritol.

Particularly preferred thermoplastic polyesters are those produced solely from terephthalic acid or a reactive derivative thereof such as a dialkyl ester, and ethylene glycol and/or 1,4-butane diol, and mixtures of these polyalkylene terephthalates. Preferred polyalkylene terephthalate mixtures contain 1 to 50% by weight of polyethylene terephthalate and 99 to 50 wt% of polybutylene terephthalate. Particularly preferred mixtures contain 1 to 30 wt% of polyethylene terephthalate and 99 to 70% by weight of polybutylene terephthalate.

The polyalkylene terephthalates preferably used generally have an intrinsic viscosity of 0.4 to 1.5 dl/g, preferably 0.5 to 1.3 dl/g and more preferably 0.55 to 1.2 dl/g, as measured in phenol/o-dichlorobenzene (1:1 parts by weight) at 25°C. using an Ubbelohde viscosimeter. Polyethylene terephthalate and polybutylene terephthalate of these intrinsic viscosity ranges, and mixtures thereof, are most preferred. As is well known, polyethylene terephthalate engineering resin producers compound their products from either virgin PET (typically 0.55-0.70 IV) or reclaimed PET from industrial scrap, polyester film scrap, bottles and, rarely polyester fiber scrap.

Additional thermoplastic polyesters which may be utilized in the practice of this invention include, for example, polyetheresters, polyester-polycarbonate blends or alloys, polyester-ABS blends or alloys, polyester-MBS blends or alloys, and impact-modified thermoplastic polyesters.

Polyalkylene terephthalates may be produced by known methods. See, for example, *Encyclopedia of Polymer Science and Technology,* Vol. 11, pages 62-128, John Wiley & Sons, Inc., copyright 1969; and Kirk-Othmer, *Encyclopedia of Chemical Technology,* 4th Ed., Vol. 19, pages 609-653, John Wiley & Sons, Inc., copyright 1996.

### Halogen-containing flame-retardant

Any of a variety of suitable organic chlorine- or bromine-containing flame retardants can be used in the practice of this invention. Preferred chlorine-containing flame retardants are available commercially under the trademarks DECHLORANE® and DECHLORANE PLUS®. Among suitable organic bromine-containing flame retardants are decabromodiphenyl ether; decabromobiphenyl; tetradecabromodiphenoxybenzene; poly(dibromophenyleneoxide); decabromodiphenylethane and analogous compounds; ethylenebis(tetrabromophthalimide), bis(tetrabromophthalimide), and analogous compounds; brominated aromatic carbonate oligomers; brominated epoxy oligomers; pentabromobenzyl polyacrylate; octabromotrimethylphenylindane; tris(tribromophenyl)cyanurate; hexabromodiphenoxyethane; and similar known organic bromine-containing flame retardants. Also useful are combinations of bromine-containing flame retardants and chlorine-containing flame retardants, and flame retardants that contain both bromine and phosphorus in the molecule such as tris(tribromoneopentyl)phosphate. Preferred flame retardants are polybromoaromatic compounds containing at least 50% by weight of bromine, especially those which consist of carbon, hydrogen and bromine (and optionally trace amounts of chlorine resulting from solvents or other materials used in their synthesis). Particularly preferred bromine-containing flame retardants are polybromostyrenic polymers which contain at least 50 wt% of bromine, and preferably at least 58 wt% of bromine, and even more preferably, at least 65 wt% of bromine. These can be formed either by oligomerizing or polymerizing one or a mixture of brominated styrene monomers, or by brominating a preformed polymer of one or more styrenic monomers. Materials of this type are available in the marketplace, some of which also contain small amounts of chlorine resulting from the process used in their manufacture. Most preferred because of its outstanding effectiveness in the practice of this invention is a polybrominated polystyrene having a typical bromine content of at least 67 wt% and which is available from Albemarle Corporation under the trade designation HP-7010. Other flame retardants can be included in the compositions of this invention, e.g., red phosphorus, organic phosphorus-containing flame retardants, such as triphenylphosphate or resorcinol diphenylphosphate, phosphorus-nitrogen-based flame retardant compositions, melamine derivatives such as melamine cyanurate, melamine pyrophosphate, or melamine polyphosphate, or mineral-type flame retardants such as magnesium hydroxide or huntite/hydromagnesite, provided such other flame retardants do not materially detract from the performance of the compositions of this invention. Mixtures of two or more non-halogen-containing flame retardants, and mixtures of one or more halogen-containing flame retardants with one or more non-halogen-containing flame retardants can be used, again with the proviso that such mixtures do not materially detract from the performance of the compositions of this invention.

### Zinc compound

As noted above, the zinc component can be a zinc borate, or a mixed oxide of boron and zinc, or zinc sulfide, or a mixture of any two or more of the foregoing. The zinc borate and the mixed oxide of boron and zinc can contain water of hydration, or they can be anhydrous materials. Materials of this type that are available on the open market include dodecaboron tetrazinc docosaoxide heptahydrate (4ZnO•6B₂O₃•7H₂O; FIREBRAKE® ZB; Borax Ltd.); zinc borate monohydrate (4ZnO•B₂O₃•H₂O; FIREBRAKE 415; Borax Ltd.); and anhydrous zinc borate (2ZnO•3B₂O₃; FIREBRAKE 500; Borax Ltd.). If desired, zinc sulfide can be utilized in combination with a zinc borate and/or a mixed oxide of boron and zinc. Mixtures of zinc sulfide and zinc borate or of zinc sulfide and a mixed oxide of boron and zinc are advantageous in that they provide finished polymer compositions having lighter coloration than when using only a zinc borate or mixed oxide of boron and zinc. On the other hand, zinc borate or mixed oxide of boron and zinc tend to exhibit higher comparative tracking indices (CTI) when used in the practice of this invention.

### Olefin-based polymer

Of the various olefin-based polymers that may be used in the practice of this invention, exceptionally good results have been achieved using a propylene-based polymer, namely a propylene homopolymer. Thus various polymers in which at least 50 percent by weight is formed from propylene are deemed especially suitable for use in this invention. Copolymers of propylene that may be used include copolymers with one or more vinyl olefins such as ethylene. Preferred however are polypropylene homopolymers, especially low flow polypropylene homopolymers, e.g., polymers having a melt flow index of no more than about 5 grams/10 minutes. Present indications are that best results may be achieved using low flow, high viscosity propylene polymers, especially low flow, high viscosity propylene homopolymers. One suitable material of this type is NOVOLEN® 1100H polymer (a low impact polypropylene homopolymer with a melt flow index of 1.8 grams/10 minutes; Targor).

It is contemplated that certain polymers and functionalized polymers may be used in lieu of or in addition to the above propylene-based polymer in the compositions of this invention to achieve similar results. Among suitable candidate materials for such use are available from Shell under the KRATON® trademark (e.g., KRATON G Series, KRATON FG-1901X, and KRATON FG-1921X polymers); from DuPont under the FUSABOND trademark (e.g., FUSABOND B BA Series); from Uniroyal under the trademarks POLYBOND® and ROYALTUF® (e.g., POLYBOND 1001, 1002, 1009, 3002, 3009, 3150, and 3200; and ROYALTUF 485, 490, and 372P20); and equivalent materials.

It is also contemplated that in addition to polymers based on propylene, other suitable candidates may include other polyolefin homopolymers, olefin copolymers, and functionalized polyolefin homopolymers and functionalized olefin copolymers. Examples of such materials include, HDPE, LLDPE, LDPE, EMA, EBA, EPR, EPDM, PP-g-MA, PP-g-AA, and similar polyolefinic materials. In selecting such other candidates their ability to withstand the typical compounding and processing temperatures used for the final formulation should be sufficient to avoid thermal and/or oxidative degradation during such operations.

### Anti-dripping agent

This optional but preferred additional component is a polymeric anti-dripping agent. Although various materials are available for this use, preferred materials include fluoropolymers and ethylene/methacrylic acid copolymers. Materials of this type that are available commercially include fluoropolymers such as polytetrafluoroethylene or related materials available from DuPont under the TEFLON® trademark (e.g., TEFLON T807N, and TEFLON 6C-N) and ethylene/methacrylic acid copolymers available from DuPont under the SURLYN® trademark such as SURLYN 8920 polymer.

### Silicon-containing polymer

Another optional component which can be used in preparing the compositions of this invention is a silicon-based component, namely an organic polymer of silicon such as poly(dimethylsiloxane) which polymer preferably is in the form of (a) a liquid, or (b) a masterbatch composed of the silicon polymer predispersed in a suitable carrier resin, or (c) a finely-divided solid composed of the silicon polymer absorbed onto an inorganic carrier such as fumed silica.

Thus finely-divided particles or powder of silica can be employed. Also suitable for use in forming the compositions of this invention are organic polymers of silicon, preferably a siloxane polymer such as poly(dimethylsiloxane). The siloxane polymer can be employed as a liquid. Another useful form of siloxane polymer is a composite material formed by dispersing the siloxane polymer within another organic polymer. Still another useful form of the siloxane polymer is formed by absorbing the polymer on an inorganic particulate solid such as fumed silica. Suitable silicon-containing materials are available from Dow-Corning. A 50% nylon 6 masterbatch of silicone MB50-011 from Dow-Corning and silicon powder 4-7051 from Dow-Corning serve as examples of such materials. These silicon-based components provide greatly enhanced CTI ratings. However, they should not be used in any situation where excellent mechanical properties of the molded article are required.

### Other Additive Components

Reinforcing agents or fillers will often be present in the compositions of this invention. Typical examples of reinforcing agents or fillers that can be used include glass fiber such as low-alkali E-glass, carbon fibers, potassium titanate fibers, glass spheres or microballoons, whiskers, talc, wollastonite, kaolin, chalk, calcined kaolin, and similar substances. Sizing agents can be used with such reinforcing agents or fillers, if desired. Suitable glass fibers that can be used in preparing the compositions of this invention are commercially available. Other conventional additives, such as antioxidants, metal deactivators, UV stabilizers, pigments and dyes, impact modifiers, processing aids, fillers, acid scavengers, thermal stabilizers, blowing agents, lubricants, nucleating agents, antistatic agents, plasticizers, and related materials, can be included in the compositions of this invention as is appropriate. The amounts of these conventional additives used will typically be as recommended by the manufacturer for obtaining the particular property enhancement for which the additive is employed.

It will be appreciated that the proportions given herein for the specified components, although typical, are nonetheless approximate, as departures from one or more of the foregoing ranges are permissible whenever deemed necessary, appropriate or desirable in any given situation in order to achieve the desired flame retardancy (e.g., passing with at least a UL V-2 rating or passing the glow wire test) and CTI value (preferably at least 400 volts), while retaining the other physical properties required for the intended use of the finished composition. Thus to achieve the optimum combination of flame retardancy, CTI value, and other properties, a few preliminary tests with the materials to be used is usually a desirable way to proceed in any given situation.

### Masterbatch Compositions

Also within the scope of this invention are masterbatch compositions wherein the components, except for the substrate polyamide or polyester polymer and the glass fiber or other reinforcing/filling materials, are in suitable relative proportions but are blended with a smaller amount of the substrate polymer. Thus this invention includes compositions which comprise a thermoplastic polyamide polymer or a thermoplastic polyester polymer with which has been blended an amount of the additive components of this invention in excess of the amount to be present in the final compound. Such masterbatch can then be diluted with additional substrate polymer and, if producing a reinforced or filled compound, one or more reinforcing/filling agents. Such compound, typically in the form of pellets, is then used in preparing the finished molded article.

### Blending Procedures

Various known procedures can be used to prepare the blends or formulations constituting the compositions of this invention. For example the polyamide or polyester polymer and the additive components being used are preferably compounded using an extruder, most preferably a twin-screw extruder. However, other apparatus such as a Buss kneader may be found useful for such compounding. When using a twin-screw extruder to compound glass-reinforced thermoplastic polyamide or thermoplastic polyester, it is desirable to add the glass fibers at a downstream portion of the extruder in order to avoid excessive glass fiber breakage. The other additive components utilized in the practice of this invention can be added with the polymer in the initial feed port of the extruder or they can be added to the extruder further downstream. The extrudate from the extruder is typically converted into granules or pellets either by cooling strands of the extruding polymer and subdividing the solidified strands into granules or pellets, or by subjecting the extrudate to concurrent die-faced pelletizing and water-cooling or air-cooling. The use of die-faced pelletizing is especially suitable when the thermoplastic polyamide or polyester is highly filled, e.g., as a masterbatch or concentrate.

If desired, the additive compositions of this invention can be formulated as powder or granular blends of the additive components. Alternatively, the components can be melt blended together, with the inclusion, where necessary or appropriate, of some of the substrate nylon or polyester polymer in which the additive composition is to blended.

### Polymer Processing

The compounded polymers of this invention can be processed in conventional ways. For example, the compounds can be transformed into the final articles by appropriate processing techniques such as injection molding, compression molding, extrusion, or like procedures.

The following Examples are presented for the purposes of illustration and are not to be taken as limitations on the scope of the invention. In these Examples 30% glass-filled nylon was compounded with the specified additive components in the amounts specified using a Werner & Pfleiderer ZSK 25 twin-screw extruder. Test pieces were formed by injection molding in a Demag ERGOTech 50-200 using heated molds. All percentages in the Examples are by weight.

In preparing the 0.8 mm test specimens for UL flame retardancy tests, the mold that was available and used for this purpose was a double-gated mold which resulted in a weld line in the middle of these test specimens. Because of this, during the UL testing the ignited specimens sometimes broke apart at the weld line resulting in flaming debris igniting the cotton, and thus the 0.8 mm specimens gave the V-2 ratings reported in Examples 1-10. Subsequent experience with specimens made with a single-gated mold (no weld line) indicates that the formulations of Examples 1-10 would have given V-0 ratings with 0.8 mm specimens if these test specimens had been made with a single-gated mold and thus had had no weld line.

### EXAMPLE 1

The glass filled nylon was formed from Durethan B29 nylon 6 and CS7923 glass fibers both from Bayer. A formulation was made from 32.6% of the polyamide, 30% of the glass fiber, 22% of brominated polystyrene containing 68% bromine (HP-7010; Albemarle Corporation), 10% of dodecaboron tetrazinc docosaoxide heptahydrate (Firebrake ZB; Borax Ltd.), 5% of polypropylene homopolymer (Novolen 1100H low impact polypropylene homopolymer having a melt flow index of 1.8 g/10 min.; Targor) and 0.4% of Teflon T807N (DuPont). The twin screw extruder was operated at temperatures ranging from 195-240°C using screw speeds of 250 rpm with outputs of 15 kg/hr. Test pieces were formed by injection molding at barrel temperatures ranging from 80-260°C, and a mold temperature of 100°C, and at screw speeds of 75 rpm for 0.8 mm thick UL bars, and 110 rpm for 1.6 and 3.2 mm thick UL bars. The test specimens exhibited UL-VB ratings of V-2 at 0.8 mm, V-0 at 1.6 mm, and V-0 at 3.2 mm. The CTI value as determined in accordance with the IEC 112-1979 (3rd edition) procedure was 550 volts. This CTI rating was even higher than an additive free blend of 70% of the same polyamide and 30% of the same glass fiber which exhibited a CTI of 475 volts.

### EXAMPLE 2

The formulation was the same as that of Example 1 except that the amount of the polypropylene was 2.5% and the amount of the polyamide was 35.1%. The compounding and molding conditions were the same as in Example 1. The test specimens exhibited UL-VB ratings of V-2 at 0.8 mm, V-0 at 1.6 mm, and V-0 at 3.2 mm. The CTI value was 450 volts.

### EXAMPLE 3

Example 1 was repeated with the sole exception that the amount of the polypropylene was 8% and the amount of the polyamide was 29.6%. The test specimens exhibited UL-VB ratings of V-2 at 0.8 mm, V-0 at 1.6 mm, and V-0 at 3.2 mm. The CTI value was 550 volts.

### EXAMPLE 4

Example 1 was repeated except that the amount of the polyamide was 33%, the amount of the polypropylene was 5% and the Teflon polymer component was omitted. The test specimens exhibited UL-VB ratings of V-2 at 0.8 mm, V-0 at 1.6 mm, and V-0 at 3.2 mm. The CTI value was 475 volts.

### EXAMPLE 5

Example 1 was repeated except that the amount of the polyamide was 32.4% and the composition additionally contain 0.2% of Irganox 1098 antioxidant (Ciba-Geigy). The test specimens exhibited UL-VB ratings of V-2 at 0.8 mm, V-0 at 1.6 mm, and V-0 at 3.2 mm. The CTI value was 550 volts.

### EXAMPLE 6

The formulation of this Example was the same as that of Example 1 except that it contained 28.6% of the polyamide, and 4% of a masterbatch composed of 50% of silicon-based polymer and 50% of nylon 6 (MB50-011; Dow-Corning). Here again the compounding and molding conditions were the same as in Example 1. The test specimens exhibited UL-VB ratings of V-2 at 0.8 mm, V-0 at 1.6 mm, and V-0 at 3.2 mm. The CTI value was 600 volts.

### EXAMPLE 7

Example 6 was repeated except that the amount of the polyamide was 31.6% and the amount of the MB50-01 masterbatch used was 1%. The test specimens exhibited UL-VB ratings of V-2 at 0.8 mm, V-0 at 1.6 mm, and V-0 at 3.2 mm. The CTI value was 550 volts.

### EXAMPLE 8

The formulation of this Example was the same as that of Example 1 except that it contained 30.6% of the polyamide and, in addition, 2% of a powder composed of a silicon-based polymer absorbed on a fumed silica carrier (4-7051; Dow-Corning). The compounding and molding conditions were the same as in Example 1. The test specimens exhibited UL-VB ratings of V-2 at 0.8 mm, V-0 at 1.6 mm, and V-0 at 3.2 mm. The CTI value was 550 volts.

### EXAMPLE 9

In this case the formulation was the same as that of Example 1 with the following exceptions: the amount of the polyamide was 35.6%, the amount of the HP-7010 flame retardant was 21%, the amount of the Firebrake ZB was 5%, and the formulation additionally contained 3% of antimony trioxide. Again the compounding and molding conditions were the same as in Example 1. The test specimens exhibited UL-VB ratings of V-2 at 0.8 mm, V-0 at 1.6 mm, and V-0 at 3.2 mm. The CTI value was 375 volts.

### EXAMPLE 10

The procedure of Example 1 was repeated except that the amount of the polyamide was 32% and 1% of ethylene/methacrylic acid copolymer (Surlyn 8920; DuPont) was used in place of 0.4% of the Teflon T807N. The test specimens exhibited UL-VB ratings of V-2 at 0.8 mm, V-0 at 1.6 mm, and V-0 at 3.2 mm. The CTI value was 525 volts.

### EXAMPLE 11

In this instance, the glass filled nylon composition was formed from nylon 6,6 (ZYTEL® EFE 1032; DuPont) and glass fiber (PPG 3540). The formulation was made from 32.6% of the polyamide, 30% of the glass fiber, 22% of brominated polystyrene (HP-7010; Albemarle Corporation), 10% of dodecaboron tetrazinc docosaoxide heptahydrate (Firebrake ZB; Borax Ltd.), 5% of polypropylene homopolymer (Novolen 1100H; Targor) and 0.4% of Teflon T807N (DuPont). The formulation was compounded using the following conditions: torque, 60.80%; specific energy, 0.182 kWhr/kg; a die pressure of 4.542 bars; and with the melt temperature of the strands at 310°C. The test specimens exhibited UL-VB ratings of V-0 at 0.8 mm, and V-0 at 1.6 mm. The CTI value was 500 volts.

### EXAMPLE 12

Tests as above were conducted on a group of formulations made from glass-filled nylon 4,6. In these tests the composition of this invention (35.6% polyamide, 30% glass fiber, 20% of the brominated polystyrene, 9% of zinc borate monohydrate, 5% of the polypropylene homopolymer, and 0.4% of the PTFE) rated V-O with 0.8 and 1.6 mm thick specimens. This formulation was compounded using a torque of 55.1%; specific energy of 0.137 kWhr/kg; a die pressure of 3.11 bars; and with the melt temperature of the strands at 335°C. The CTI was 275 volts. In contrast, five formulations made under similar conditions but devoid of the polypropylene and PTFE components, and in which the zinc borate was replaced by antimony trioxide, each had CTI ratings of 175 volts.

Components referred to herein by chemical name or formula, whether referred to in the singular or plural, are identified as they exist prior to coming into contact with another substance referred to by chemical name or chemical type (e.g., another component, a solvent, or a polymer). Even though the claims hereinafter may refer to substances, components and/or ingredients in the present tense ("comprises," "is," etc.), the reference is to the substance, component or ingredient as it existed at the time just before it was first contacted, blended or mixed with one or more other substances, components and/or ingredients in accordance with the present disclosure.

While this invention has been discussed with particular reference to thermoplastic nylons and thermoplastic polyesters, it is contemplated that the principles and advantages of this invention are applicable to certain other thermoplastic polymers wherein both flame retardancy and increased comparative tracking index (CTI) of molded articles produced therefrom are desired. Such other thermoplastic polymers include syndiotactic polystyrene, polysulfone, polyethersulfone, polyetherketone, polycarbonate, polycarbonate-ABS, polyestercarbonate, polycarbonate-polybutylene terephthalate, polyphenylsulfone, polyphenylene oxide, polyphenylene blends such as polyphenylene oxide-polystyrene, and polyphenylene oxide-high impact polystyrene, polyphenylene sulfide, thermoplastic elastomers, and similar thermoplastic polymers which can be processed at temperatures of 350°C or less.

## Claims

1. A molding composition which comprises a blend formed from at least the following components: (A) a thermoplastic polyamide or thermoplastic polyester polymer, said polymer being unreinforced, reinforced, or filled, (B) at least one organic halogen-containing flame retardant, (C) a zinc borate, a mixed oxide of zinc and boron, or zinc sulfide, or a mixture of any two or more of the foregoing; and (D) an olefin-based polymer.

2. A composition of claim 1 wherein (A) is nylon 6 or nylon 6,6 and wherein (D) is a propylene-based polymer.

3. A composition of claim 1 or 2 wherein (B) is at least one polybromoaromatic compound containing at least 50% by weight of bromine.

4. A composition of claim 1 or 2 wherein (B) is a polybromostyrenic polymer containing at least 58% by weight of bromine.

5. A composition of claim 1 or 2 wherein (B) is a polybromostyrenic polymer containing at least 65% by weight of bromine.

6. A composition of any of the preceding claims wherein (C) is a dodecaboron tetrazinc docosaoxide hydrate.

7. A composition of any of the preceding claims wherein (D) is a propylene homopolymer having a melt flow index of not more than about 5 grams/10 minutes.

8. A composition of any of the preceding claims wherein the components used in forming said composition further include at least one polymeric anti-dripping agent.

9. A composition of claim 8 wherein the anti-dripping agent is a polyfluoroethylene polymer.

10. A composition of claim 8 wherein the anti-dripping agent is an ethylene/methacrylic acid copolymer.

11. A composition of any of claims 1-10 wherein the components used in forming said composition further comprise a CTI-increasing amount of an organic polymer of silicon absorbed on fumed silica.

12. A composition of any of claims 1-10 wherein the components used in forming said composition further comprise a CTI-increasing amount of an organic polymer of silicon predispersed in a polyamide or polyester resin.

13. A composition of claim 11 or 12 wherein the organic polymer of silicon is a polysiloxane polymer.

14. A composition of claim 13 wherein the polymer of silicon is a poly(dimethylsiloxane) polymer.

15. An article molded from a composition of any of claims 1-14.

16. An article of claim 15 wherein the article contains glass fiber or a mineral filler, or both.

17. A method of increasing the flame retardancy and comparative tracking index of a thermoplastic polyamide or a thermoplastic polyester, which method comprises blending with the polyamide or polyester at least the components of any of claims 1-16 to form a molding composition.

18. A method of claim 17 further comprising molding said molding composition while in molten condition.

19. A method of claim 17 further comprising performing said molding with glass fiber or mineral filler, or both, included in the molten composition.

20. A method of producing a polyamide article or a polyester article having increased flame retardancy and comparative tracking index, which method comprises molding a melt blend of any of claims 1-14.

21. A method of claim 20 further comprising performing said molding with glass fiber or mineral filler, or both, included in the melt blend.

22. A flame retardant additive composition which comprises (i) at least one organic halogen-containing flame retardant, (ii) a zinc borate, a mixed oxide of zinc and boron, or zinc sulfide or any combination of any two or more of these, and (iii) an olefin-based polymer, in proportions of 0.5 to 40 parts by weight of (i) and 0.3 to 12 parts by weight of (ii) per part by weight of (iii).

23. An additive composition of claim 22 further comprising (iv) up to 2 parts by weight of polymeric anti-dripping agent, (v) up to 3 parts by weight of an organic silicon-containing polymer used as the polymer absorbed on fumed silica, (vi) up to 5 parts by weight of organic silicon-containing polymer dispersed in a polyamide or polyester resin, and/or (vii) up to 10 parts by weight of processing, stabilizing, impact strength, and/or compatibilizing additives per part by weight of the olefin-based polymer present therein, at least one of (iv)-(vii) being present in said additive composition.

24. An additive composition of claim 22 or 23 wherein (iii) is a polypropylene homopolymer having a melt flow index of not more than about 5 grams/10 minutes.

25. An additive composition of any of claims 22-24 wherein (i) is at least one polybromoaromatic compound containing at least 50% by weight of bromine.

26. An additive composition of any of claims 22-25 wherein said polybromoaromatic compound is a polybromostyrenic polymer containing at least 58% by weight of bromine.

27. An additive composition of claim 26 wherein said polybromostyrenic polymer contains at least 65% by weight of bromine, and wherein (ii) is a dodecaboron tetrazinc docosaoxide hydrate.
